# FASCICULE DE BREVET EUROPEEN

(11) **EP 2 521 870 B1**
(45) Date de publication et mention de la délivrance du brevet: **14.05.2014**
(21) Numéro de dépôt: 11704254.9
(22) Date de dépôt: 06.01.2011
(51) Int. Cl.: F16H 1/22, B02C 15/00

(54) **BROYEUR MUNI D'UN DISPOSITIF D'ENTRAINEMENT POUR UNE COURONNE DENTEE**
MÜHLE MIT EINER ANTRIEBSVORRICHTUNG FÜR EINEN ZAHNKRANZ
CRUSHER PROVIDED WITH A DRIVE DEVICE FOR A CROWN GEAR

(30) Priorité: 06.01.2010 FR 1050053
(43) Date de publication de la demande: 14.11.2012
(73) Titulaire: Compagnie Engrenages et Reducteurs-Messian-Durand, 59400 Cambrai (FR)
(72) Inventeur: LESSARD, Fabrice, F-59400 Cambrai (FR)
(74) Mandataire: Jacobson, Claude
(86) Numéro de dépôt international: PCT/FR2011/050015
(87) Numéro de publication internationale: WO 2011/083274

(56) Documents cités:
- WO-A1-97/22817
- WO-A1-2007/114817
- WO-A2-2008/060274
- DE-U1- 7 627 915
- GB-A- 2 288 651
- JP-A- 2001 327 121
- US-A- 2 441 901
- US-A- 2 823 558
- US-A1- 2005 011 307

## Description

La présente invention concerne un broyeur du type indiqué dans le préambule de la revendication 1. Un tel broyeur est connu du document US2441901.

On connaît des broyeurs horizontaux dans l'état de la technique. Ces broyeurs comprennent une chambre de broyage sur laquelle est fixée une couronne dentée. La couronne dentée est entraînée par un réducteur qui est relié à un moteur. Le réducteur comporte un pignon de sortie qui engrène avec la couronne dentée.

Le dispositif d'entrainement de l'état de la technique a les inconvénients suivants :
- La puissance transmissible par le réducteur est limitée par la capacité de la denture de la couronne dentée; et
- Le réducteur est difficile à monter et à démonter, et il nécessite souvent le démontage et le déplacement du carter en vue d'un changement de pignon de sortie.

L'invention a comme but de pallier à au moins l'un de ces inconvénients.

A cet effet, l'invention a pour objet un broyeur du type indiqué ci-dessus, caractérisé par les caractéristiques de la revendication 1.

Selon des modes particuliers de réalisation, l'invention comporte l'une ou plusieurs des caractéristiques suivantes :

Les pignons de sortie sont disposés sur un cercle primitif, et les axes de rotation de tous les pignons de sortie sont disposés à l'intérieur d'une plage angulaire inférieure à 180°, et notamment inférieure à 90°, de ce cercle primitif.

Le dispositif comprend un moteur d'entraînement, notamment un seul moteur d'entraînement, le moteur d'entraînement comprenant un arbre de moteur et l'arbre de moteur étant fixé en rotation à l'arbre d'entraînement.

Le carter délimite un espace de pignon, qui loge au moins un pignon de sortie, et un espace aval, qui loge au moins l'étage de réduction aval, dans lequel le réducteur comprend des moyens d'étanchéité séparant l'espace de pignon et au moins l'espace aval.

Le réducteur comprend au moins un étage de réduction amont entraîné par l'arbre d'entraînement, l'étage de réduction amont étant le cas échéant adapté pour entraîner un étage de réduction aval.

Le ou chaque étage de réduction amont comprend :
- une roue dentée amont, pour chaque groupe de pignons, et
- un pignon amont, notamment un seul pignon amont, adapté pour entraîner chaque roue dentée amont et étant solidaire en rotation par rapport à l'arbre d'entraînement.

Le ou chaque étage de réduction amont comprend, le cas échéant pour chaque groupe de pignons, une roue dentée intermédiaire, chaque roue dentée intermédiaire engrenant avec une roue dentée amont et le pignon amont.

Le réducteur comprend un module de pignon de sortie, ce module de pignon de sortie comprenant,
- un pignon de sortie,
- un arbre de sortie portant le pignon de sortie et éventuellement une roue dentée aval,
- deux roulements supportant l'arbre de sortie,
et le module de pignon de sortie est retirable d'un seul bloc du carter et/ou insérable d'un seul bloc dans le carter.

Le réducteur comprend un module de roue amont comprenant :
- une ou la roue dentée amont,
- un arbre amont portant la roue dentée amont,
- deux roulements supportant l'arbre amont
et dans lequel le module de roue amont est retirable d'un seul bloc du carter et/ou insérable d'un seul bloc dans le carter.

A chaque fois le sens d'insertion du module pignon de sortie dans le carter et le sens d'insertion du module de roue amont et le sens de retrait du module pignon de sortie du carter et le sens de retrait du module roue amont du carter sont dirigés l'un à l'opposé de l'autre.

Dispositif d'entraînement dans lequel le réducteur comprend un module d'entraînement comprenant :
- l'arbre d'entraînement,
- le pignon amont,
et le module d'entraînement est retirable d'un seul bloc du carter et/ou insérable d'un seul bloc dans le carter.

Le réducteur comprend un module intermédiaire comprenant une roue dentée intermédiaire et le module intermédiaire est retirable du carter selon un sens de retrait perpendiculaire l'axe de rotation C-C de la roue intermédiaire, et en particulier le module intermédiaire étant retirable du carter par une ouverture adaptée pour loger le module de roue amont.

Chaque pignon de sortie est adapté pour appliquer une force d'engrènement à la couronne dentée 6 et dans lequel la force résultante FR de tous ces forces d'engrènement a une composante dirigée verticalement vers le haut.

L'invention sera mieux comprise à la lecture de la description qui va suivre, donnée uniquement à titre d'exemple et faite en se référant aux dessins annexés, sur lesquels :
- la figure 1 est une vue schématique de côté d'un broyeur horizontal selon l'invention ;
- la figure 2 est une vue axiale du broyeur de la figure 1 ;
- la figure 3 est une vue en coupe du réducteur du broyeur des figures 1 et 2 ;
- la figure 4 est une vue à plus grande échelle du détail IV de la figure 3 ;
- la figure 5 est une vue à plus grande échelle du détail V de la figure 3 ;
- la figure 6 est une vue schématique du pignon aval et des roues dentées aval, pris selon la flèche VI de la figure 5 ;
- la figure 7 est une vue en perspective du réducteur à l'état assemblé, le carter 22 étant omis,
- la figure 8 est une vue en coupe d'une partie du réducteur lors du retrait du module roue amont, du retrait du module d'entraînement et du retrait du module allonge ;
- la figure 9 est une vue identique à celle de la figure 8, lors du retrait du module de pignon de sortie et lors du retrait d'une roue dentée intermédiaire;
- la figure 10 montre en perspective le module d'entraînement ;
- la figure 11 montre en perspective la roue dentée intermédiaire et l'arbre intermédiaire ;
- la figure 12 montre en perspective le module roue amont ;
- la figure 13 montre en perspective le module allonge ; et
- la figure 14 montre en perspective le module pignon de sortie.

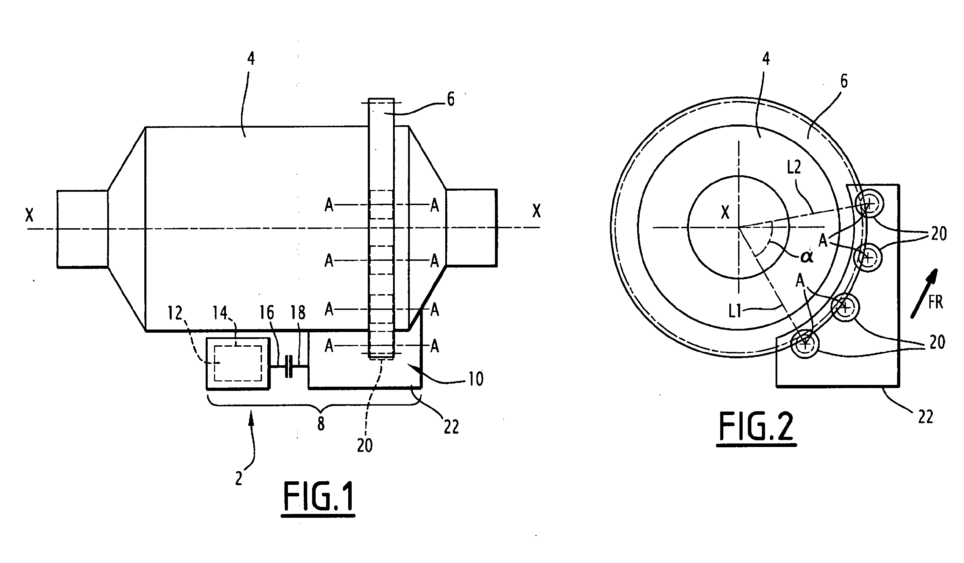

Sur la figure 1 est montré un broyeur horizontal, désigné par la référence générale 2.

Le broyeur horizontal 2 comprend une chambre de broyage 4, une couronne dentée 6 fixée à la chambre de broyage 4, et un dispositif d'entraînement 8 adapté pour entraîner la couronne dentée 6.

La chambre de broyage 4 est logée en rotation autour d'un axe de rotation X-X, qui est disposé horizontalement.

Le dispositif d'entraînement 8 est muni d'un réducteur 10 et d'un seul moteur d'entraînement 12.

Le moteur d'entraînement 12 comporte un rotor 14 qui est fixé à un arbre de moteur 16.

Le réducteur 10 comporte un arbre d'entraînement 18 qui est adapté pour être fixé à l'arbre de moteur 16. L'arbre d'entraînement 18 et l'arbre de moteur 16 sont reliés par un accouplement.

Le réducteur 10 est en outre muni de quatre pignons de sortie 20 dont chacun est adapté pour engrener avec la couronne dentée 6 et adapté pour être entraîné par l'arbre d'entraînement 18. Le réducteur 10 dispose d'un carter 22. D'une manière générale, le réducteur 10 comprend au moins deux pignons de sortie. Il peut comporter trois pignons de sortie ou, comme dans le cas présent, exactement quatre pignons de sortie 20.

Les pignons de sortie 20 ont des dents droites. La couronne dentée 6 a également des dents droites.

Les pignons de sortie 20 définissent chacun un axe de rotation A-A. Ces axes de rotation A-A se trouvent sur un cercle primitif dont le centre coïncide avec l'axe X-X. Les axes de rotation A-A de tous les pignons de sortie 20 sont disposés sur une plage angulaire α qui est inférieure à 180°, et notamment inférieure à 90°, de ce cercle primitif. Ceci facilite le montage du réducteur au niveau de la couronne dentée et conduit à un faible encombrement du broyeur horizontal.

Pendant le fonctionnement chaque pignon de sortie 20 applique une force d'engrènement à la couronne dentée 6. Tous les pignons de sortie 20 sont disposés par rapport à la couronne dentée 6 de telle sorte que la force résultante FR de ces forces d'engrènement ait une composante dirigée verticalement vers le haut. Ainsi, la force résultante FR agit à l'encontre du poids de la couronne 6 et de la chambre de broyage 4. En conséquence, les paliers qui portent la chambre de broyage et la couronne dentée peuvent avoir des dimensions relativement faibles.

A cet effet, les axes de rotation de tous les pignons de sortie 20 sont avantageusement disposés à l'intérieur d'une plage angulaire qui est limitée par une première limite L1 et une seconde limite L2.

La première limite L1 est inclinée de 30° par rapport à un demi-plan s'étendant verticalement vers le bas depuis l'axe X-X et décalée de ce demi-plan dans le sens d'entrainement de la couronne 6. La seconde limité L2 est inclinée de 100° par rapport au demi-plan précité et décalée de ce demi-plan dans le sens d'entrainement de la couronne dentée 6. Sur la Figure 2, le sens d'entrainement de la couronne 6 est le sens anti-horaire.

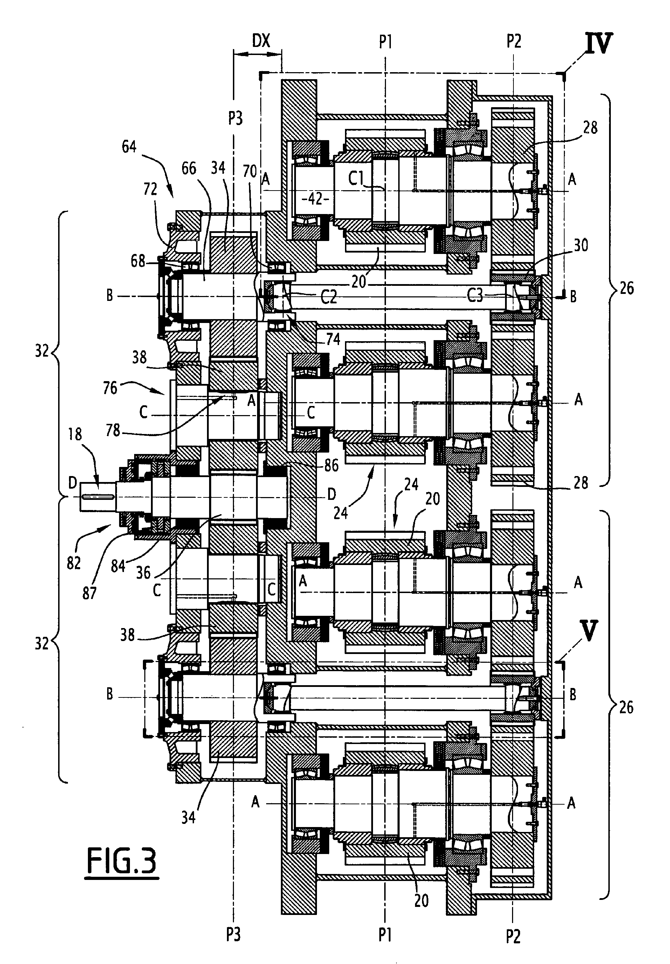

Par la suite, la structure du réducteur 10 sera décrite en référence à la figure 3.

Le réducteur 10 forme des groupes de pignons 24, chaque groupe de pignons 24 étant constitué de deux pignons de sortie 20 adjacentes. Le réducteur 10 comprend pour chaque groupe de pignons 24 un étage de réduction aval 26 adapté pour entraîner ce groupe de pignons 24. A cet effet, chaque étage de réduction aval 26 comporte deux roues dentées aval 28. L'étage de réduction aval 26 comprend également un seul pignon aval 30 engrenant avec chaque roue dentée aval 28 de l'étage de réduction aval 26.

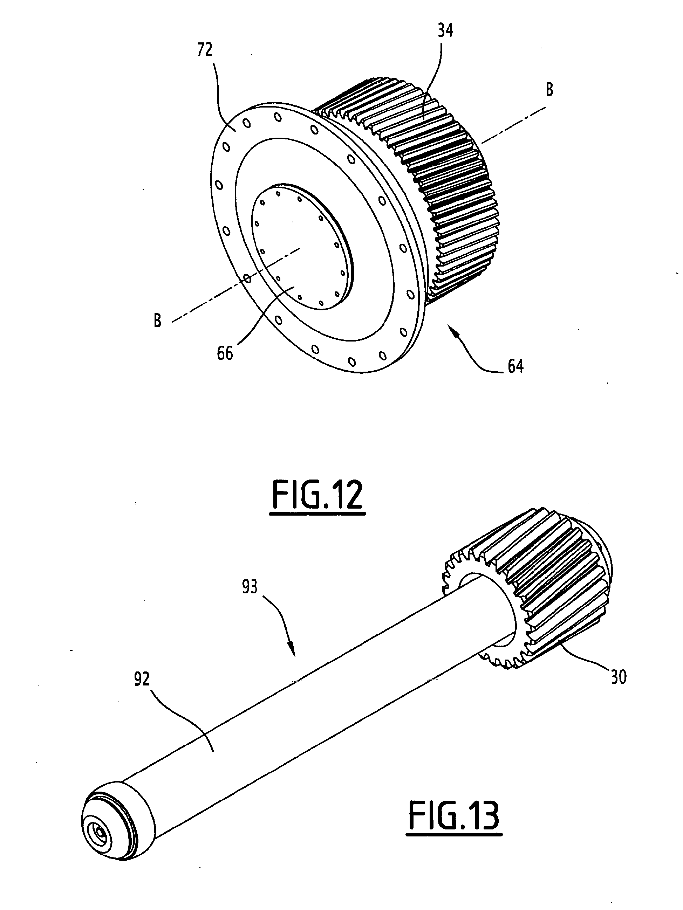

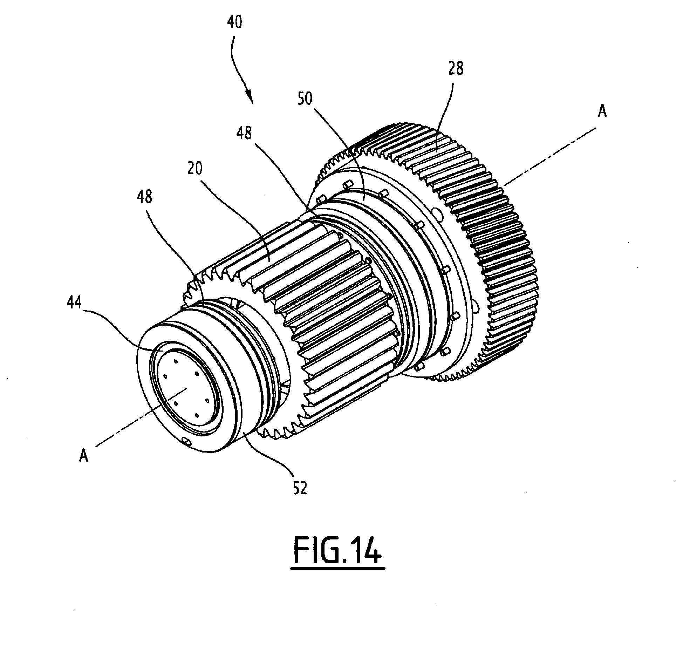

Chaque roue dentée aval 28 et chaque pignon aval 30 ont des dents obliques, notamment hélicoïdales (cf. Figures 13 et 14).

Le réducteur 10 dispose pour chaque groupe de deux pignons de sortie 20, donc pour chaque étage de réduction aval 26, d'un étage de réduction amont 32. Chaque étage de réduction amont 32 est entraîné par l'arbre d'entraînement 18 et comprend une roue dentée amont 34, un pignon amont 36 et une roue intermédiaire 38. La roue dentée intermédiaire 38 engrène d'une part avec la roue dentée amont 34 et d'autre part avec le pignon amont 36. Aussi, les deux étages de réduction amont 32 ont un seul pignon amont commun 36.

La roue dentée intermédiaire 38 permet d'augmenter l'entraxe entre l'arbre d'entraînement 18 et la roue dentée amont 34.

Chaque roue dentée amont 34, chaque roue dentée intermédiaire 38 et le pignon amont 36 ont des dents obliques, et notamment hélicoïdales.

L'arbre d'entraînement 18 entraîne donc chaque étage de réduction amont 32, dont chacun entraîne un étage de réduction aval 26, qui entraîne les pignons de sortie 20.

Le réducteur 10 définit une direction d'axe DX. Tous les axes de rotation des pignons et roues dentées du réducteur 10 s'étendent parallèlement à cette direction DX.

Chaque pignon de sortie 20 définit un plan médian, s'étendant perpendiculairement à la direction d'axe DX. Dans leur position neutre (cf. ci-dessous), tous les plans médians des pignons 20 sont centrés sur un plan de pignon de sortie P1, perpendiculairement à la direction d'axe DX. Les plans médians des roues dentées aval 28 et des pignons aval 30 sont alignés axialement selon un plan P2. Le plan P2 est parallèle au plan de pignon de sortie P1.

Les roues dentées amont 34, le pignon amont 36, et le cas échéant, la roue dentée intermédiaire 38 ont chacun un plan médian, s'étendant perpendiculairement à la direction d'axe DX. Ces plans médians sont alignés axialement l'un par rapport à l'autre et s'étendent selon un plan d'étage de réduction amont P3. Le plan P3 est parallèle aux plans P1 et P2.

Les plans P2 et P3 sont situés de deux côtés opposés du plan P1. En d'autres termes, considérés selon la direction d'axe DX, les pignons de sortie 20, sont disposés entre l'étage de réduction aval 26 et l'étage de réduction amont 32.

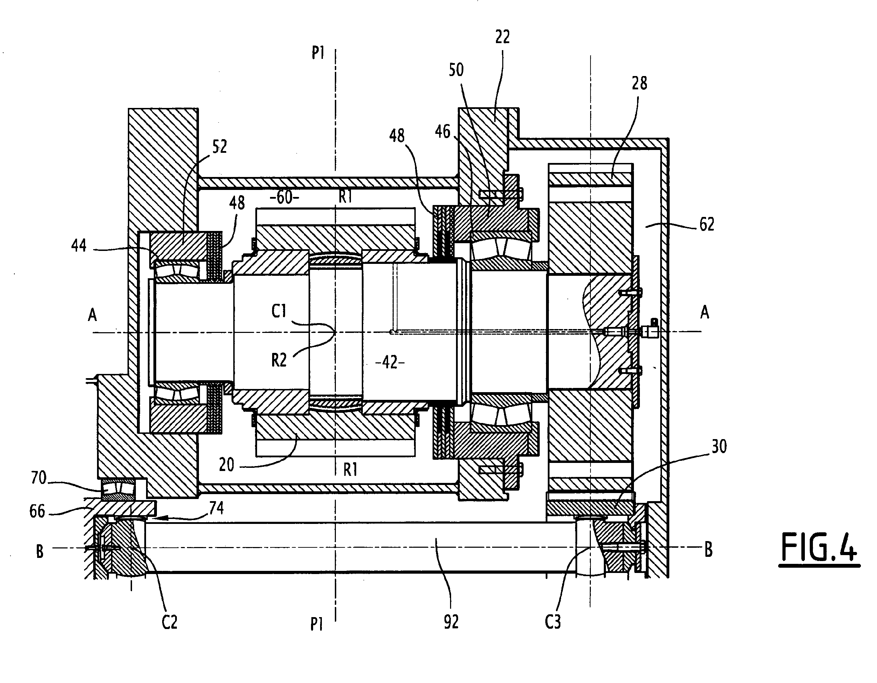

Sur la figure 4 est représentée plus en détail la partie du réducteur comportant le pignon de sortie 20 et la roue dentée aval 28.

Le réducteur 10 comprend, pour chaque pignon de sortie 20 un module de pignon de sortie 40. Ce module de pignon de sortie 40 comprend l'un des pignons de sortie 20 ainsi qu'une roue dentée aval associée 28. Le module de pignon de sortie 40 comporte également un arbre de sortie 42 et deux roulements 44, 46 qui supportent l'arbre 42 par rapport au carter 22. Le module de pignon de sortie 40 est en outre muni de deux joints d'étanchéité 48 (cf. Figure 14).

De plus, le module de pignon de sortie 40 comporte un premier bloc support 50 portant la piste extérieure du roulement 46 et une portion extérieure d'un des joints d'étanchéité 48.

Un deuxième bloc support 52 du module de pignon de sortie porte la piste extérieure du roulement 44 et une portion extérieure de l'autre joint d'étanchéité 48.

Le pignon de sortie 20 est disposé sur l'arbre de sortie 42 axialement entre les deux roulements 44, 46, tandis que la roue dentée aval 28 est disposée sur l'arbre de sortie 42 du côté du roulement 46 opposé au pignon de sortie 20.

Le pignon de sortie 20 est monté fixe en rotation sur l'arbre de sortie 42 par tous moyens appropriés, tel que cannelures, frettage, et/ou clavetage.

Dans le cas présent, le pignon de sortie 20 est monté sur l'arbre de sortie 42 fixe en rotation autour de l'axe de rotation A-A, mais ayant une liberté de rotation autour d'un centre de rotule C1 défini par deux axes R1, R2 mutuellement perpendiculaires et perpendiculaires à l'axe A-A (voir Figure 4). La liberté de rotation autour de ce centre de rotule C1 est supérieure à 0,04° et au maximum 0,4° par rapport à une position neutre dans laquelle l'axe central du pignon de sortie est aligné avec l'axe A-A. Ainsi, la position angulaire relative entre l'arbre de sortie 42 et le pignon de sortie 20 s'adapte en fonction du point de contact entre le pignon de sortie 20 et la couronne dentée 6.

Comme ceci est également visible sur la figure 4, le carter 22 délimite un espace de pignon 60, dans lequel se trouvent les pignons de sortie 20, et un espace aval 62 logeant au moins l'étage de réduction aval 26. Ces deux espaces 60, 62 sont séparés l'un de l'autre d'une manière étanche au moyen du joint d'étanchéité 48. L'espace de pignon 60 comporte un premier lubrifiant, par exemple de la graisse. L'espace aval 62 comporte un deuxième lubrifiant, par exemple de l'huile. Ainsi, les composants du réducteur différents des pignons de sortie 20 peuvent être lubrifiées par un lubrifiant différent de celui des pignons de sortie.

L'espace aval 62 comprend avantageusement également les autres roues dentées 28, 38 et pignons 30 du réducteur 10.

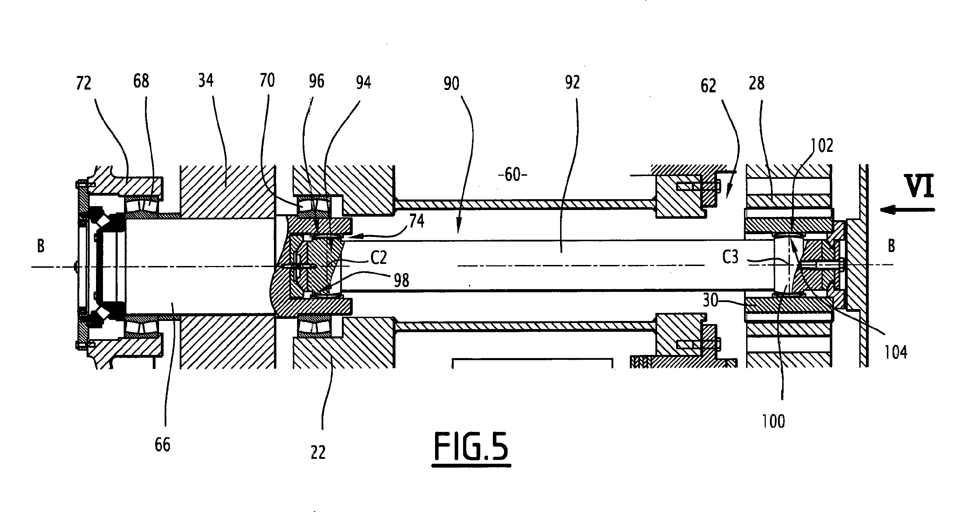

Le réducteur 10, dans le cas présent l'étage de réduction amont 32, comporte un module roue amont 64 (cf. Figure 12). Ce module roue amont 64 comprend la roue dentée amont 34, un arbre amont 66, portant la roue dentée amont 34, et deux roulements 68, 70, supportant l'arbre amont 66. L'arbre amont définit un axe de rotation B-B de la roue dentée amont. Le module roue amont 64 comporte également un bloc support 72 par lequel le roulement 68 est fixé au carter 22. La roue dentée amont 34 est disposée axialement entre les deux roulements 68, 70. L'arbre amont 66 comporte, du côté axial dirigé vers l'étage de réduction aval 26, un espace de réception 74 (cf. Figure 5) qui sera décrit plus loin.

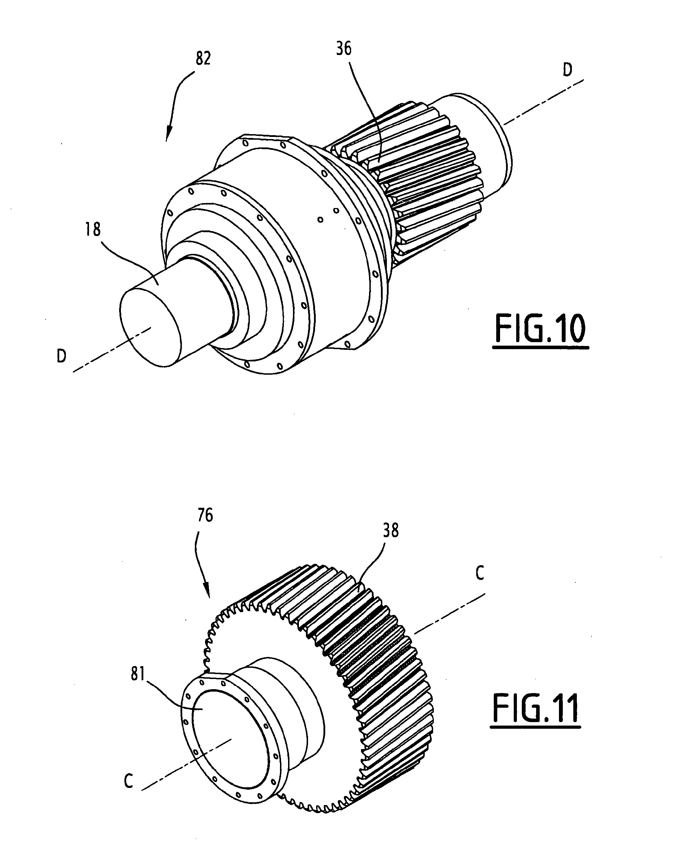

Le réducteur 10 dispose d'un module intermédiaire 76 (voir figures 3 et 11). Le module intermédiaire 76 est constitué de la roue dentée intermédiaire 38 et d'un palier 78. En variante, au lieu du palier 78 deux roulements sont disposés à l'intérieur de la roue dentée 38. Le réducteur 10 comprend également un arbre intermédiaire 81 fixé au carter et supportant le module intermédiaire 76. La roue intermédiaire 38 est logée en rotation autour d'un axe de rotation C-C défini par l'arbre intermédiaire 81.

Le réducteur 10 est en outre muni d'un module d'entraînement 82 (Cf. Figure 10) qui comporte l'arbre d'entraînement 18, le pignon amont 36 et des paliers 84, 86. L'arbre d'entraînement 18 définit un axe de rotation D-D du pignon amont 36.

L'arbre d'entraînement 18 est monté dans les paliers 84, 86 mobile en translation radialement par rapport à l'axe de rotation D-D. Ainsi, le pignon amont 36 a une liberté de translation selon des directions radiales par rapport à l'axe de rotation D-D. Ainsi, le pignon amont 36 a également une liberté de translation radialement aux axes de rotation C-C des roues dentées intermédiaires 38 avec lesquelles ce pignon amont 36 engrène. La liberté de déplacement est suffisante pour permettre une égalisation des forces d'engrenage agissant d'une part entre l'une des deux roues dentées intermédiaires 38 et le pignon amont 36 et d'autre part entre l'autre des deux roues dentées intermédiaires 38 et le pignon amont 36.

Egalement, le réducteur 10 comporte une butée 87 fixant axialement l'arbre d'entraînement 18 par rapport au carter 22. Cette butée 87 a une liberté en translation selon un plan perpendiculaire à l'axe D-D afin de conférer au pignon amont 36 sa liberté de translation précitée.

De préférence, le pignon amont 36 et l'arbre d'entraînement sont fabriqués d'une seule pièce.

Sur la figure 5 est représentée plus en détail la liaison 90 entre l'étage de réduction amont 32 et l'étage de réduction aval 26.

Cette liaison 90 est adaptée pour transmettre la rotation de l'arbre amont 66 au pignon aval 30. La liaison 90 comporte un arbre allonge 92 qui est d'une part fixé en rotation à l'arbre 66 de l'étage de réduction amont 32 et d'autre part fixé en rotation au pignon aval 30.

Par ailleurs, l'arbre amont 66 et l'arbre allonge 92 définissent un centre de rotule C2. L'arbre allonge 92 est décalable angulairement de l'axe B-B autour de ce centre C2. Aussi, l'arbre allonge 92 et le pignon aval 30 définissent un centre de rotule C3. Le pignon aval 30 est angulairement décalable par rapport à l'axe central de l'arbre allonge 92 autour de ce centre de rotule C3. Les centres de rotule C2, C3 sont constitués par les caractéristiques suivantes.

L'arbre allonge 92 comporte une extrémité axiale 94 ayant une portée sphérique convexe 96.

L'espace de réception 74 de l'arbre amont 66 comporte une portée sphérique creuse 98. Ces deux portées sphériques 96, 98 coopèrent et définissent le centre de rotule C2 de l'arbre allonge 92 par rapport à l'arbre 66 et ceci selon des axes perpendiculaires à l'axe de rotation B-B et perpendiculaires l'un à l'autre. L'arbre allonge 92 comporte une extrémité 100 ayant une portée sphérique convexe 102 coopérant avec une portée sphérique concave 104 ménagée dans le pignon aval 30, et définissant le centre de rotule C3 du pignon aval 30 autour de l'arbre allongé 92.

Par ailleurs, le pignon aval 30 est fixé axialement sur l'arbre allonge 92. Ainsi, le pignon aval 30 et l'arbre allonge 92 font partie d'un module allonge 93 (Figure 13).

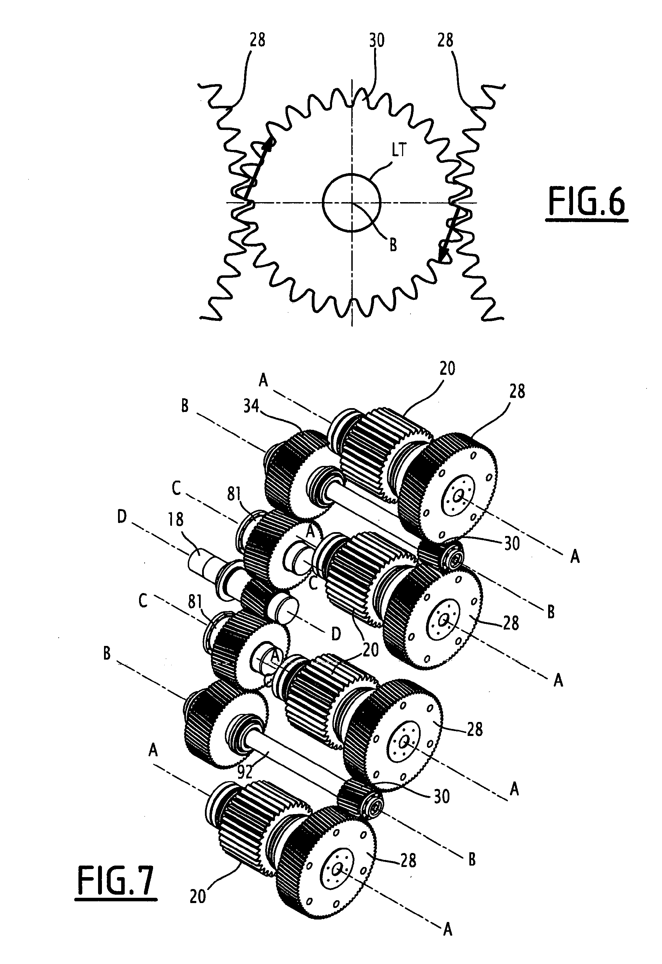

Sur la figure 6 est montré schématiquement et en vue axiale les roues dentées aval 28 et le pignon aval 30. Comme ceci est visible, grâce à la liberté de décalage angulaire autour des centres de rotule C2, C3, le pignon aval 30 a une liberté de translation selon des directions radiales par rapport à l'axe de rotation B-B. Ainsi, le pignon aval 30 a également une liberté de translation radialement aux axes de rotation A-A des roues dentées aval 28 avec lesquelles ce pignon aval 30 engrène. La liberté de déplacement est suffisante pour permettre une égalisation des forces d'engrènage agissant d'une part entre l'une des deux roues dentées aval 28 et le pignon aval 30 associé et d'autre part entre l'autre des deux roues dentées aval 28 et ce pignon aval 30. La liberté de translation est indiquée par un cercle LT à l'intérieur duquel se situent toutes les positions possibles de l'axe central du pignon aval 30. Le pignon aval 30 adapte ainsi sa position radiale automatiquement en fonction des forces de réaction générées par les roues dentées aval 28.

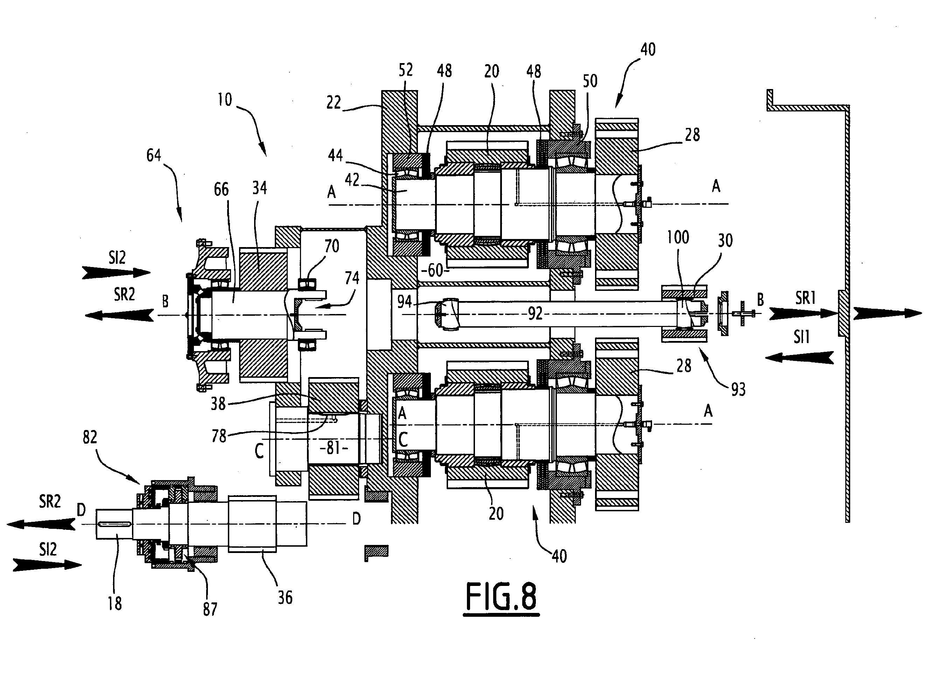

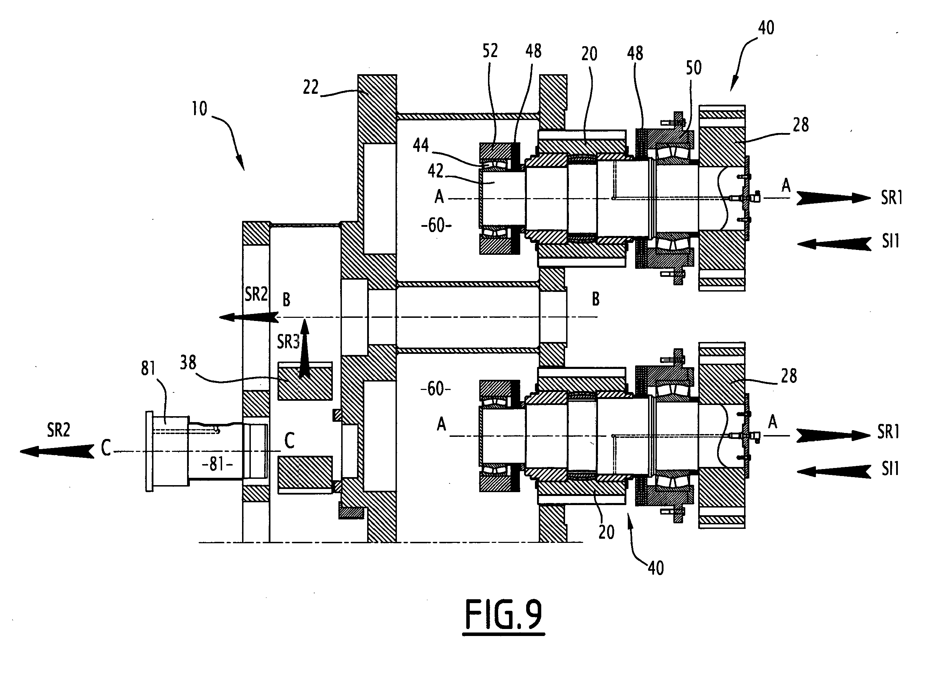

La figure 7 montre en perspective le réducteur 10, le carter 22 étant omis. Les Figures 8 et 9 montrent le montage et le démontage des différents composants du réducteur 10.

La figure 8 illustre en coupe approximativement la moitié supérieure de la figure 3.

En se référant à la figure 8, on voit que le module roue amont 64 est retirable du carter 22 d'un seul bloc selon un sens de retrait SR2. Aussi, le module roue amont 64 est insérable dans le carter d'un seul bloc selon un sens d'insertion SI2.

De même, le module allonge 93, comprenant le pignon aval 30 et l'arbre allonge 92, est retirable du carter 22 d'un seul bloc, et ceci selon un sens de retrait SR1.

Le module allonge 93 est insérable dans le carter 22 selon un sens d'insertion SI1.

La figure 9 montre le module de pignon de sortie 40 lors de son démontage. On voit que le module de pignon de sortie 40 est retirable d'un seul bloc du carter 22, selon un sens de retrait SR1. De même, le module de pignon de sortie 40 est insérable dans le carter 22 d'un seul bloc selon un sens d'insertion SI1.

Sur la figure 8 on voit que le module d'entraînement 82 est retirable du carter d'un seul bloc selon le sens de retrait SR2.

La figure 9 montre également le démontage du module intermédiaire 76. A cet effet, l'arbre intermédiaire 81 est retiré axialement du carter 22 selon le sens SR2. Ensuite, le module intermédiaire 76 est décalé dans le carter selon un sens de retrait SR3 dirigé radialement par rapport à l'axe de rotation C-C jusqu'à ce que le module intermédiaire 76 se trouve en face de l'ouverture de réception du module roue amont 64. Ensuite, le module intermédiaire 76 est retiré du carter 22 selon le sens de retrait SR2. Le montage du module intermédiaire 76 est effectué en sens inverse.

Le module intermédiaire 76 est donc retirable du carter 22 exclusivement après le retrait du module roue amont 64 mais indépendamment du module d'entraînement 82 et même lorsque celui-ci est à l'état monté dans le carter.

Les sens de retrait SR1 et SR2 sont dirigés l'un à l'opposé de l'autre. De même, les sens d'insertion SI1 et SI2 sont dirigés l'un à l'opposé de l'autre.

Le dispositif d'entraînement 8 selon l'invention est particulièrement avantageux étant donné qu'un seul moteur d'entraînement 12 entraîne un grand nombre de pignons de sortie, dans l'exemple donné quatre pignons de sortie, ce qui permet de répartir la puissance d'entraînement d'un seul moteur et de maintenir les forces de réaction entre les pignons de sortie 20 et la couronne dentée 6 faible.

Par ailleurs, la construction en modules permet de désassembler le réducteur complètement tout en maintenant le carter 22 en place.

Aussi, chacun des modules 82, 64, 40, 93 est retirable ou insérable indépendamment de tous les autres modules ce qui facilite l'entretien du réducteur.

Le montage du module intermédiaire 76 à travers l'ouverture du carter 22 qui reçoit le module roue amont 64 garde le nombre d'ouvertures dans le carter 22 faibles.

Par ailleurs, la disposition des étages de réduction amont 32 et des étages de réduction aval 26 des deux côtés opposés des pignons de sortie 20 conduit à un faible encombrement du réducteur.

Selon d'autres caractéristiques de l'invention,
- un ou chaque pignon de sortie est retirable du carter 22 selon un sens de retrait qui s'étend selon l'axe du pignon de sortie ;
- le sens de retrait du pignon de sortie est parallèle à l'axe de rotation de la chambre de broyage 4 sur tout le trajet entre une position dans laquelle le pignon de sortie est entièrement en dehors du carter et une position montée.

## Revendications

1. Broyeur, notamment un broyeur horizontal, comprenant une chambre de broyage (4), une couronne dentée (6) fixée à la chambre de broyage et un dispositif d'entraînement de la couronne dentée, le dispositif d'entraînement étant un dispositif d'entraînement (8) pour la couronne dentée (6), du type comprenant un réducteur (10) qui est muni :
- d'un arbre d'entraînement (18) adapté pour être relié à un moteur,
- d'au moins un pignon de sortie (20), le ou chaque pignon de sortie étant adapté pour engrener avec la couronne dentée et pour être entraîné par l'arbre d'entraînement, et
- d'un carter (22),
le réducteur comprenant au moins deux pignons de sortie, notamment trois pignons de sortie, et en particulier quatre pignons de sortie,
le réducteur formant au moins un groupe de pignons (24) constitué à chaque fois de deux pignons de sortie, notamment deux pignons de sortie adjacents, **caractérisé en ce que** le réducteur comprend au moins un étage de réduction aval (26) et chaque groupe de pignons est entraîné par un étage de réduction aval, **en ce que**
au moins un ou chaque étage de réduction aval (26) comprend :
- une roue dentée aval (28) par pignon de sortie du groupe de pignons, et
- un pignon aval (30), notamment un seul pignon aval (30), engrenant avec chaque roue dentée (28) aval de cet étage de réduction aval (26), **en ce que**
le pignon aval (30) est monté avec une mobilité radiale par rapport aux axes de rotation (A-A) des roues dentées aval (28), **en ce que**
le réducteur comprend au moins un étage de réduction amont (32) entraîné par l'arbre d'entraînement, l'étage de réduction amont (32) étant adapté pour entraîner un étage de réduction aval (26), et **en ce que**
l'étage de réduction amont et l'étage de réduction aval sont reliés par un arbre allongé (92), et le pignon aval (30) est monté par une liaison (90) à deux centres de rotules (C2, C3) à l'étage de réduction amont.

2. Broyeur selon la revendication 1 dans lequel le réducteur comprend un module de pignon de sortie (40), ce module de pignon de sortie (40) comprenant,
- un pignon de sortie (20),
- un arbre de sortie (42) portant le pignon de sortie (20) et éventuellement une roue dentée aval (28),
- deux roulements (44, 46) supportant l'arbre de sortie,
et dans lequel le module de pignon de sortie est retirable d'un seul bloc du carter et/ou insérable d'un seul bloc dans le carter (22).

3. Broyeur selon la revendication 1 ou 2, dans lequel le réducteur comprend un module de roue amont (64) comprenant :
- une ou la roue dentée amont (34),
- un arbre amont (66) portant la roue dentée amont,
- deux roulements (68, 70) supportant l'arbre amont
et dans lequel le module de roue amont (64) est retirable d'un seul bloc du carter et/ou insérable d'un seul bloc dans le carter.

4. Broyeur selon la revendication 3, dans lequel l'arbre allonge (92) comporte une extrémité axiale (94) ayant une portée sphérique convexe (96) et l'arbre amont (66) comporte un espace de réception (74) qui comporte une portée sphérique creuse (98), ces deux portées sphériques (96, 98) coopérant et définissant le centre de rotule (C2) de l'arbre allonge (92) par rapport à l'arbre (66) et ceci selon des axes perpendiculaires à l'axe de rotation (B-B) de la roue dentée amont (34) et perpendiculaires l'un à l'autre.

5. Broyeur selon l'une quelconque des revendications 1 à 4, dans lequel l'arbre allonge (92) comporte une extrémité (100) ayant une portée sphérique convexe (102) coopérant avec une portée sphérique concave (104) ménagée dans le pignon aval (30), et définissant le centre de rotule (C3) du pignon aval (30) autour de l'arbre allonge (92).

6. Broyeur selon l'une quelconque des revendications 1 à 5, dans lequel le réducteur comprend un module d'entraînement (82) comprenant :
- l'arbre d'entraînement (18),
- le pignon amont (36),
et dans lequel le module d'entraînement (82) est retirable d'un seul bloc du carter (22) et/ou insérable d'un seul bloc dans le carter.

7. Broyeur selon au moins les revendications 2 et 3, dans lequel à chaque fois le sens d'insertion (S11) du module pignon de sortie (40) dans le carter (22) et le sens d'insertion (S12) du module de roue amont (64) et le sens de retrait (SR1) du module pignon de sortie (40) du carter et le sens de retrait (SR2) du module roue amont (64) du carter sont dirigés l'un à l'opposé de l'autre.

8. Broyeur selon l'une quelconque des revendications précédentes, dans lequel le réducteur comprend un module intermédiaire (76) comprenant une roue dentée intermédiaire (38) et le module intermédiaire (76) est retirable du carter (22) selon un sens de retrait (SR3) perpendiculaire l'axe de rotation C-C de la roue intermédiaire, et en particulier le module intermédiaire (76) étant retirable du carter par une ouverture adaptée pour loger le module de roue amont (64).

9. Broyeur selon l'une quelconque des revendications précédentes, dans lequel les pignons de sortie (20) sont disposés sur un cercle primitif, et les axes de rotation (A-A) de tous les pignons de sortie sont disposés à l'intérieur d'une plage angulaire inférieure à 180°, et notamment inférieure à 90°, de ce cercle primitif.

10. Broyeur selon l'une quelconque des revendications précédentes comprenant en outre un moteur d'entraînement (11), notamment un seul moteur d'entraînement, le moteur d'entraînement comprenant un arbre de moteur (16) et l'arbre de moteur étant fixé en rotation à l'arbre d'entraînement (18).

11. Broyeur selon l'une quelconque des revendications précédentes dans lequel le carter (22) délimite un espace de pignon (60), qui loge au moins un pignon de sortie (20), et un espace aval (62), qui loge au moins l'étage de réduction aval, dans lequel le réducteur comprend des moyens d'étanchéité séparant l'espace de pignon et au moins l'espace aval.

12. Broyeur selon les revendications précédentes, dans lequel le ou chaque étage de réduction amont (32) comprend :
- une roue dentée amont (34), pour chaque groupe de pignons, et
- un pignon amont (36), notamment un seul pignon amont, adapté pour entraîner chaque roue dentée amont (34) et étant solidaire en rotation par rapport à l'arbre d'entraînement.

13. Broyeur selon l'une quelconque des revendications précédentes, dans lequel le ou chaque étage de réduction amont (32) comprend, le cas échéant pour chaque groupe de pignons, une roue dentée intermédiaire (38), chaque roue dentée intermédiaire engrenant avec une roue dentée amont (34) et le pignon amont (36).

14. Broyeur selon l'une quelconque des revendications précédentes, dans lequel chaque pignon de sortie est adapté pour appliquer une force d'engrènement à la couronne dentée (6) et dans lequel la force résultante FR de tous ces forces d'engrènement a une composante dirigée verticalement vers le haut.

## Patentansprüche

1. Schredder, insbesondere horizontaler Schredder, mit einer Schredderkammer (4), einem Zahnkranz (6), der an der Schredderkammer befestigt ist, und einer Vorrichtung zum Antreiben des Zahnkranzes, wobei die Vorrichtung zum Antreiben eine Antriebsvorrichtung (8) für den Zahnkranz (6) ist, des Typs, der aufweist ein Getriebe (10), das ausgestattet ist mit:
- einer Antriebswelle (18), die eingerichtet ist um mit einem Motor verbunden zu sein,
- wenigstens einem Ausgangsritzel (20), wobei das oder jedes Ausgangsritzel eingerichtet ist um mit dem Zahnkranz im Eingriff zu sein und um von der Antriebswelle angetrieben zu werden, und
- einem Gehäuse (22),
wobei das Getriebe aufweist wenigstens zwei Ausgangsritzel, insbesondere drei Ausgangsritzel, und insbesondere vier Ausgangsritzel,
wobei das Getriebe wenigstens eine Ritzel-Gruppe (24) bildet, die von jeweils zwei Ausgangsritzeln, insbesondere zwei benachbarten Ausgangsritzeln, gebildet ist, **dadurch gekennzeichnet, dass** das Getriebe wenigstens eine Nach-Getriebestufe (26) aufweist und jede Ritzel-Gruppe von einer Nach-Getriebestufe angetrieben ist, und dadurch, dass
wenigstens eine oder jede Nach-Getriebestufe (26) aufweist:
- ein nachgeschaltetes Zahnrad (28) pro Ausgangritzel der Ritzel-Gruppe und
- ein nachgeschaltetes Ritzel (30), insbesondere ein einzelnes nachgeschaltetes Ritzel (30), welches mit jedem nachgeschalteten Zahnrad (28) dieser Nach-Getriebestufe (26) im Eingriff ist, und dadurch, dass
das nachgeschaltete Ritzel (30) mit einer radialen Bewegbarkeit bezüglich der Rotationsachsen (A-A) der nachgeschalteten Zahnräder (28) montiert ist, und dadurch, dass
das Getriebe wenigstens eine Vor-Getriebestufe (32) aufweist, die von der Antriebswelle angetrieben ist, wobei die Vor-Getriebestufe (32) eingerichtet ist um eine Nach-Getriebestufe (26) anzutreiben, und dadurch, dass
die Vor-Getriebestufe und die Nach-Getriebestufe mittels einer langgestreckten Welle (92) verbunden sind, wobei das nachgeschaltete Ritzel (30) über eine Verbindung (90) mit zwei Kugelgelenkzentren (C2, C3) an die Vor-Getriebestufe montiert ist.

2. Schredder gemäß Anspruch 1, wobei das Getriebe ein Ausgangsritzel-Modul (40) aufweist, welches Ausgangsritzel-Modul (40) aufweist
- ein Ausgangsritzel (20),
- eine Ausgangswelle (42), welche das Ausgangsritzel (20) und optional ein vorgeschaltetes Zahnrad (28) trägt,
- zwei Wälzlager (44, 46), die die Ausgangswelle lagern,
und wobei das Ausgangsritzel-Modul in einem Block aus dem Gehäuse herausnehmbar und/oder in einem Block in das Gehäuse (22) einsetzbar ist.

3. Schredder gemäß Anspruch 1 oder 2, wobei das Getriebe ein Vorgeschaltet-Rad-Modul (64) aufweist, das aufweist:
- ein oder das vorgeschaltete Zahnrad (34),
- eine vorgeschaltete Welle (66), die das vorgeschaltete Zahnrad trägt,
- zwei Wälzlager (68, 70), die die vorgeschaltete Welle lagern,
und wobei das Vorgeschaltet-Rad-Modul (64) in einem Block aus dem Gehäuse herausnehmbar und/oder in einem Block in das Gehäuse einsetzbar ist.

4. Schredder gemäß Anspruch 3, wobei die langgestreckte Welle (92) ein Axialende (94) hat, das einen kugeligen konvexen Abschnitt (96) aufweist, und wobei die vorgeschaltete Welle (66) einen Aufnahmeraum (74) hat, der einen kugeligen hohlen Abschnitt (98) aufweist, wobei die beiden kugeligen Abschnitte (96, 98) zusammenwirken und das Kugelgelenkzentrum (C2) der langgestreckten Welle (92) bezüglich der Welle (66) definieren und dies um Achsen, die senkrecht zu der Rotationsachse (B-B) des vorgeschalteten Zahnrads (34) und senkrecht zueinander sind.

5. Schredder gemäß irgendeinem der Ansprüche 1 bis 4, wobei die langgestreckte Achse (92) ein Ende (100) hat, das einen kugeligen konvexen Abschnitt (102) hat, der mit einem kugeligen konkaven Abschnitt (104) zusammenwirkt, der in dem nachgeschalteten Ritzel (30) vorgesehen ist, und definierend das Kugelgelenkzentrum (C3) des nachgeschalteten Ritzels (30) um die langgestreckte Welle (92).

6. Schredder gemäß irgendeinem der Ansprüche 1 bis 5, wobei das Getriebe ein Antriebsmodul (82) aufweist, das aufweist:
- eine Antriebswelle (18),
- das vorgeschaltete Ritzel (36),
und wobei das Antriebsmodul (82) in einem Block aus dem Gehäuse (22) herausnehmbar und/oder in einem Block in das Gehäuse einsetzbar ist.

7. Schredder gemäß wenigstens den Ansprüchen 2 und 3, wobei jedes Mal die Richtung des Einsetzens (SI1) des Ausgangsritzel-Moduls (40) in das Gehäuse (22) und die Richtung des Einsetzens (SI2) des Vorgeschaltet-Rad-Moduls (64) und die Richtung des Herausnehmens (SR1) des Ausgangsritzel-Moduls (40) aus dem Gehäuse und die Richtung des Herausnehmens (SR2) des Vorgeschaltet-Rad-Moduls (64) aus dem Gehäuse einander entgegengesetzt gerichtet sind.

8. Schredder gemäß irgendeinem der vorhergehenden Ansprüche, wobei das Getriebe ein Zwischenmodul (76) aufweist, das ein Zwischenzahnrad (38) aufweist und das Zwischenmodul (76) aus dem Gehäuse (22) herausnehmbar ist in einer Herausnehmen-Richtung (SR3), die senkrecht ist zu der Rotationsachse C-C des Zwischenrads, und wobei insbesondere das Zwischenmodul (76) aus dem Gehäuse herausnehmbar ist durch eine Öffnung, die eingerichtet ist zum Unterbringen des Vorgeschaltet-Rad-Moduls (64).

9. Schredder gemäß irgendeinem der vorhergehenden Ansprüche, wobei die Ausgangsritzel (20) auf einem Teilkreis angeordnet sind, wobei die Rotationsachsen (A-A) aller Ausgangszahnräder im Innern eines Winkelbereichs von kleiner als 180°, und insbesondere kleiner als 90°, dieses Teilkreises angeordnet sind.

10. Schredder gemäß irgendeinem der vorhergehenden Ansprüche, ferner aufweisend einen Antriebsmotor (11), insbesondere einen einzigen Antriebsmotor, wobei der Antriebsmotor eine Motorwelle (16) aufweist, wobei die Motorwelle drehfest an der Antriebswelle (18) angebracht ist.

11. Schredder gemäß irgendeinem der vorhergehenden Ansprüche, wobei das Gehäuse (22) begrenzt einen Ritzelraum (60), der wenigstens ein Ausgangsritzel (20) unterbringt, einen Nach-Raum (62), der wenigstens die Nach-Getriebestufe unterbringt, wobei das Getriebe Dichtmittel aufweist, die den Ritzelraum und wenigstens den Nach-Raum trennen.

12. Schredder gemäß einem der vorhergehenden Ansprüche, wobei die oder jede Vor-Getriebestufe (32) aufweist:
- ein vorgeschaltetes Zahnrad (34) für jede der Ritzel-Gruppen, und
- ein vorgeschaltetes Ritzel (36), insbesondere ein einzelnes vorgeschaltetes Zahnrad, das eingerichtet ist, um jedes vorgeschaltete Zahnrad (34) anzutreiben, und das bezüglich der Antriebswelle drehfest ist.

13. Schredder gemäß irgendeinem der vorhergehenden Ansprüche, wobei die oder jede Vor-Getriebestufe (32), gegebenenfalls für jede Ritzel-Gruppe, ein Zwischenzahnrad (38) aufweist, wobei jedes Zwischenzahnrad mit einem vorgeschalteten Zahnrad (34) und dem vorgeschalteten Ritzel (36) im Eingriff ist.

14. Schredder gemäß irgendeinem der vorhergehenden Ansprüche, wobei jedes Ritzel eingerichtet ist um ein Eingriffskraft auf den Zahnkranz (6) auszuüben und wobei die resultierenden Kraft FR all dieser Eingriffskräfte eine Komponente hat, die vertikal nach oben gerichtet ist.

## Claims

1. A grinder, notably a horizontal grinder, comprising a grinding chamber (4) a crown gear (6) attached to the grinding chamber and a device for driving the crown gear,
the drive device being a drive device (8) for the crown gear (6), of the type comprising a reduction transmission (10) which is provided:
- with a drive shaft (18) adapted so as to be connected to a motor,
- at least one output pinion (20), said or each output pinion being adapted so as to mesh with the crown gear and be driven by the drive shaft, and
- with a casing (22),
and in that the reduction transmission comprises at least two output pinions, notably three output pinions and in particular four output pinions,
the reduction transmission forms at least one group of pinions (24), each time consisting of two output pinions, notably two adjacent output pinions, **characterized in that** the reduction transmission comprises at least one downstream reduction stage (26) and each group of pinions is driven by a downstream reduction stage, and wherein
at least one or each downstream reduction stage (26) comprises:
- a downstream toothed wheel (28) per output pinion of the group of pinions, and
- a downstream pinion (30) notably a single downstream pinion (30) meshing with-each downstream toothed wheel (28) of this downstream reduction stage (26), and wherein
the downstream pinion (3) is mounted with radial mobility relatively to the axes of rotation (A-A) of the downstream toothed wheels (28), and wherein
the reduction transmission comprises at least one upstream reduction stage (32) driven by the drive shaft, the upstream reduction stage (32) being adapted so as to drive a downstream reduction stage (26), and wherein
the upstream reduction stage and the downstream reduction stage are connected through an elongated shaft (92), and the downstream pinion (30) is mounted through a link (90) having two ball joint centers (C2, C3) to the upstream reduction stage.

2. The grinder according to claim 1, wherein the reduction transmission comprises an output pinion module (40), this output pinion module (40) comprising,
- an output pinion (20),
- an output shaft (42) bearing the output pinion (20) and optionally a downstream toothed wheel (28),
- two roller bearings (44, 46) supporting the output shaft,
and wherein the output pinion module may be withdrawn as a single block from the casing and/or inserted as a single block into the casing (22).

3. The grinder according to claim 1 or 2, wherein the reduction transmission comprises an upstream wheel module (64) comprising:
- one or said upstream toothed wheel (34),
- an upstream shaft (66) bearing the upstream toothed wheel,
- two roller bearings (68, 70) supporting the upstream shaft
and wherein the upstream wheel module (64) may be withdrawn as a single block from the casing and/or inserted as a single block into the casing.

4. The grinder according to claim 3, wherein the elongated shaft (92) includes an axial end (94) having a convex spherical span (96) and the upstream shaft (66) includes a receiving space (74) which includes a hollow spherical span (98), these two spherical spans (96), (98) cooperate and define the ball joint center (C2) of the elongated shaft (92) relatively to the shaft (66) and this along axes perpendicular to the axis of rotation (B-B) of the upstream toothed wheel (34) and perpendicular to each other.

5. The grinder according to any of claims 1 to 4, wherein the elongated shaft (92) includes an end (100) having a convex spherical span (102) cooperating with a concave spherical span (104) made in the downstream pinion (30), and defining the ball joint center (C3) of the downstream pinion (30) around the elongated shaft (92).

6. The grinder according to any of claims 1 to 5, wherein the reduction transmission comprises a drive module (82) comprising:
- the drive shaft (18),
- the upstream pinion (36),
and wherein the drive module (82) may be withdrawn as a single block from the casing (22) and/or inserted as a single block into the casing.

7. The grinder according to at least claims 2 and 3, wherein at each time the insertion direction (S11) of the output pinion module (40) into the casing (22) and the insertion direction (S12) of the upstream wheel module (64) and the withdrawal direction (SR1) of the output pinion module (40) from the casing and the withdrawal direction (SR2) of the upstream wheel module (64) from the casing are directed opposite to each other.

8. The grinder according to any of the preceding claims, wherein the reduction transmission comprises an intermediate module (76) comprising an intermediate toothed wheel (38) and the intermediate module (76) may be withdrawn from the casing (22) along a withdrawal direction (SR3) perpendicular to the axis of rotation C-C of the intermediate wheel, and in particular the intermediate module (76) being able to be withdrawn from the casing through an aperture adapted for accommodating the upstream wheel module (64).

9. The grinder according to any of the preceding claims, wherein the output pinions (20) are arranged on a pitch circle, and the axes of rotation (A-A) of all the output pinions are positioned inside an angular range of less than 180°, and notably less than 90°, of this pitch circle.

10. The grinder according to any of the preceding claims further comprising a driving motor (11) notably a single driving motor, the driving motor comprising a motor shaft (16) and the motor shaft being attached in rotation to the drive shaft (18).

11. The grinder according to any of the preceding claims wherein the casing (22) delimits a pinion space (60) which accommodates at least one output pinion (20), and a downstream space (62) which accommodates at least the downstream reduction stage, wherein the reduction transmission comprises sealing means separating the pinion space and at least the downstream space.

12. The grinder according to the preceding claims, wherein said or each upstream reduction stage (32) comprises:
- an upstream toothed wheel (34) for each group of pinions, and
- an upstream pinion (36) notably a single upstream pinion, adapted for driving each upstream toothed wheel (34) and being interdependent in rotation relatively to the drive shaft.

13. The grinder according to any of the preceding claims, wherein said or each upstream reduction stage (32) comprises, if necessary for each group of pinions, an intermediate toothed wheel (38), each intermediate toothed wheel meshing with an upstream toothed wheel (34) and the upstream pinion (36).

14. The grinder according to any of the preceding claims, wherein each output pinion is adapted so as to apply a meshing force to the crown gear (6) and wherein the resulting force FR of all these meshing forces has a component directed vertically upwards.
